# EUROPÄISCHE PATENTSCHRIFT

(11) **EP 1 649 918 B1**
(45) Veröffentlichungstag und Bekanntmachung des Hinweises auf die Patenterteilung: **13.06.2007**
(21) Anmeldenummer: 05020551.7
(22) Anmeldetag: 21.09.2005
(51) Int. Cl.: B01D 46/04

(54) **Reinigungssystem für Entstaubungsfilter**
Cleaning device for dust-removing filters
Dispositif de nettoyage de filtres de dépoussiérage

(30) Priorität: 22.10.2004 IT MI20042014; 23.03.2005 IT MI20050095
(43) Veröffentlichungstag der Anmeldung: 26.04.2006
(73) Patentinhaber: Messina, Aurelio, I-20095 Cusano Milanino (Milano) (IT)
(72) Erfinder: Messina, Aurelio, I-20095 Cusano Milanino (Milano) (IT)
(74) Vertreter: Jaumann, Paolo

(56) Entgegenhaltungen:
- WO-A-03/035218
- DE-U1- 8 408 258
- US-A- 6 073 905
- PATENT ABSTRACTS OF JAPAN Bd. 017, Nr. 436 (C-1096), 12. August 1993 (1993-08-12) & JP 05 096113 A (TOKAI PLANT ENG KK), 20. April 1993 (1993-04-20)

## Beschreibung

Gegenstand der vorliegend Erfindung ist ein Reinigungssystem für Einstaubungsfilter mit Verwendung eines neuen Ausstosssystems mit Kolbensteuerventilen und einem neuen Blockiersystem des Ausstossrohres.

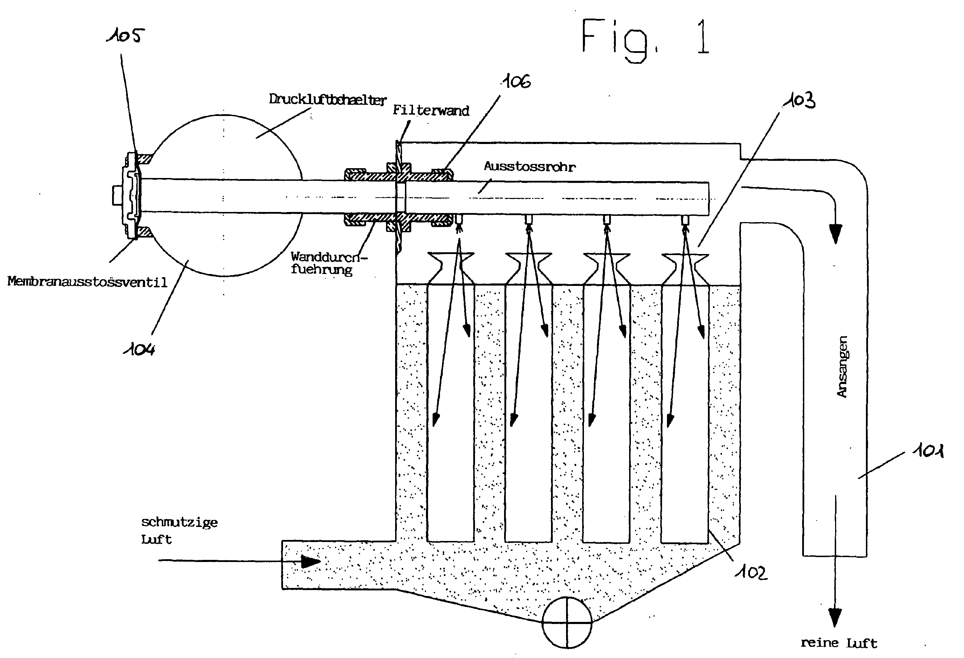

Für die Wartung von Filtern 102, wie Tuchfilter, Sackfilter oder Filtereinsätze, die mittels eines Ansaugsystems 101 Schmutzpartikel und dergleichen zurückhalten, sind Reinigungssysteme für solche Entstaubungsfilter bekannt, strukturmässig ausgelegt wie in Fig. 1 dargestellt. Das bekannte Reinigungssystem für Entstaubungsfilter besteht aus einem Trägerrohr, das seinerseits mit einem Ausstossrohr für den Ausstoss eines Luftstrahls 103 gegen die Filterelemente 102 verbunden ist.

Die Druckluft 103 kommt aus einem Behälter 104, der mit einem Druckluftversorgungssystem verbunden ist, an das elektrisch oder pneumatisch gesteuerte Membranausstossventile 105 angeschlossenen sind.

Ein Beispiel solcher bekannten Systeme, die mit Membranausstossventilen versehen sind, ist aus dem US-Patent 6.073.905 bekannt.

Diese Ventile 105 sind mit dem Ausstossrohr innen im Filter über eine Wanddurchführung 106 verbunden.

Die Funktion dieser Reinigungssysteme wird im Allgemeinen von einem automatischen Befehl aktiviert, der seinerseits bei einem festgelegten Filterverschmutzungsgrad ausgelöst wird oder, alternativ, automatisch periodisch erfolgt oder vom Bediener manuell betätigt wird.

Nach Aktivieren des Reinigungssystems wird der aus dem Druckluftbehälter 104 in Folge eines Befehls der Ausstossventile 105 zugeführte Luftstrahl 103 in das Filterelement geleitet, wodurch die in diesem zurückgehaltenen Partikel in einen darunter stehenden Behälter fallen.

Die in den bekannten Reinigungssystemen für Entstaubungsfilter verwendeten Membranausstoßventile 105 haben den Nachteil, dass sie besonders platzraubend und delikat sind und daher eine planmäßige Wartung erforderlich machen.

Für die Montage dieser Membranventile am Druckluftbehälter ist außerdem ein gewisser Abstand einzuhalten, der von Mal zu Mal festgelegt wird, ebenso wie die erforderliche Anzahl der Ventile, so dass es nicht möglich ist, sie nahe aneinander zu montieren.

Und nicht zuletzt stellt das für den Anschluss der Membranventile an das Ausstoßrohr erforderliche Verbindungsstück eine komplizierte und kostspielige Lösung dar.

Primäre Aufgabe der vorliegenden Erfindung ist es, die oben bei den bekannten Reinigungssystemen für Entstaubungsfilter vorhandenen Nachteile durch den Einsatz von Ventilen zu beseitigen, die am Druckluftbehälter mit kleinem Achsabstand montiert werden können und keinem starken Verschleiß ausgesetzt sind.

Ein weiteres Ziel der vorliegenden Erfindung besteht darin, ein Reinigungssystem für Entstaubungsfilter vorzuschlagen, das bei gleichem Druckluftdurchfluss Ventile mit geringerem Platzbedarf einsetzt.

Ein weiteres Ziel der vorliegenden Erfindung besteht darin, ein Reinigungssystem für Entstaubungsfilter vorzuschlagen, das einfach und zu wettbewerbsfähigen Kosten herzustellen ist.

Nicht zuletzt ist es Ziel der vorliegenden Erfindung ein Reinigungssystem für Entstaubungsfilter vorzuschlagen, das einen zuverlässigen und besonders effizienten Betrieb gewährleistet.

Die Erfüllung dieser Aufgabe, dieser Ziele und anderer, die aus der Beschreibung der Erfindung hervorgehen, werden mit dem Reinigungssystem für Entstaubungsfilter erreicht, das einen mit einem Trägerrohr verbundenen Druckluftbehälter aufweist, wobei das Trägerrohr seinerseits mit einem Ausstoßrohr verbunden ist und sich dadurch kennzeichnet, dass ein Kolbenausstoßventil am Trägerrohr montiert ist, das an einem seiner Enden ein über eine Rückzugfeder mit einem Kolben verbundenes Schlussstück aufweist, wobei der Kolben im Ausstoßventil läuft und wobei das Ausstoßventil außerdem an seinem anderen Ende einen Dichtungsring aufweist.

Vorteilhafterweise sind der Kolben, der Dichtungsring und das Schlussstück an der Verbindungsstelle mit dem Trägerrohr jeweils mit einer Ringdichtung versehen.

Weitere Merkmale und Vorteile der Erfindung ergeben sich aus der Beschreibung zweier erfindungsgemäßer, bevorzugter aber nicht ausschließlicher Ausführungsformen des Reinigungssystems für Entstaubungsfilter, wie aber nicht einschränkend, in den beiliegenden Zeichnungen dargestellt, wobei:
Figur 1 eine schematische Ansicht eines bekannten Reinigungssystems für Entstaubungsfilter darstellt, das ein Membranausstoßventil einsetzt;
Fig. 2 eine seitliche Ansicht, teilweise im Schnitt, einer ersten Ausführungsform des erfindungsgemäßen Reinigungssystems für Entstaubungsfilter darstellt;
Fig. 3 eine seitliche Ansicht, teilweise im Schnitt, einer zweiten Ausführungsform des erfindungsgemäßen Reinigungssystems für Entstaubungsfilter darstellt.

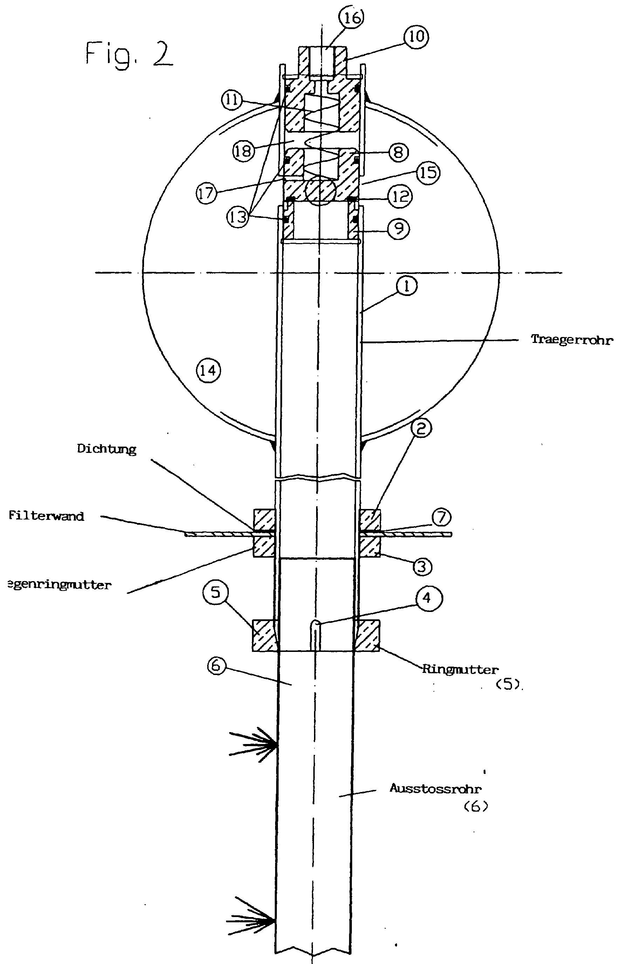

Wie in Fig. 2 dargestellt, besteht das erfindungsgemäße Reinigungssystems für Entstaubungsfilter aus einem Druckluftbehälter 14, der an ein Trägerrohr 1 angeschlossen ist, das seinerseits an ein Ausstoßrohr 6 zum Ausstoß eines Luftstrahls gegen die (nicht dargestellten) Filterelemente angeschlossen ist.

Das Trägerrohr 1 ist quer an den Behälter 14 angeschweißt und ist mit den Filterelementen über eine Ringmutter 2, eine Gegenringmutter 3 und eine Dichtung 7 verbunden.

Außerdem ist das sich innen im Filterelement befindliche Ende des Trägerrohrs 1 zum Einsetzen einer konischen Ringmutter 5, zur Halterung und zum Blockieren des Ausstoßrohres 6, mit einer Gewindebohrung versehen. Diese konische Ringmutter ersetzt vollständig den, im Stand der Technik sehr kostspieligen, Wanddurchbruch 106.

Der Luftdurchfluss vom Behälter 14 zum Ausstoßrohr 6 wird von einem Kolbenausstoßventil geregelt, an dessen einer Seite ein Dichtungsring 9 und an der anderen Seite ein Schlussstück 10 vorgesehen ist, zwischen welchen sich der Kolben 8, bestückt mit einer Dichtung 12 und einer Rückzugfeder 11 entgegenwirkend, bewegt.

Außerdem ist im Anschlusspunkt der Elemente 8, 9 und 10 mit dem Trägerrohr 1 jeweils eine Ringdichtung 13 vorgesehen.

Wenn das System nicht aktiviert ist, d.h. der Durchlass 16 im Schlussstück 10 geschlossen ist, ist die Kammer 18 mit dem Druckluftbehälter 14 über die Bohrung 17 im Kolben 8 verbunden, so dass der Kolben 8 in der abgebildeten Stellung bleibt und die Verbindung zwischen dem Druckluftbehälter und dem Trägerrohr absperrt, an das wieder das Ausstoßrohr 6 angeschlossen ist.

Das System wird also durch Öffnen des Durchlasses 16 im Schlussstück 10 aktiviert. Dadurch wird der Druck aus der Kammer 18 abgelassen und die Rückzugfeder zieht den Kolben 8 gegen das Schlussstück 10, öffnet somit den Durchlass 15 und gibt den Durchfluss der Druckluft vom Behälter 14 zum Ausstoßrohr 6 frei.

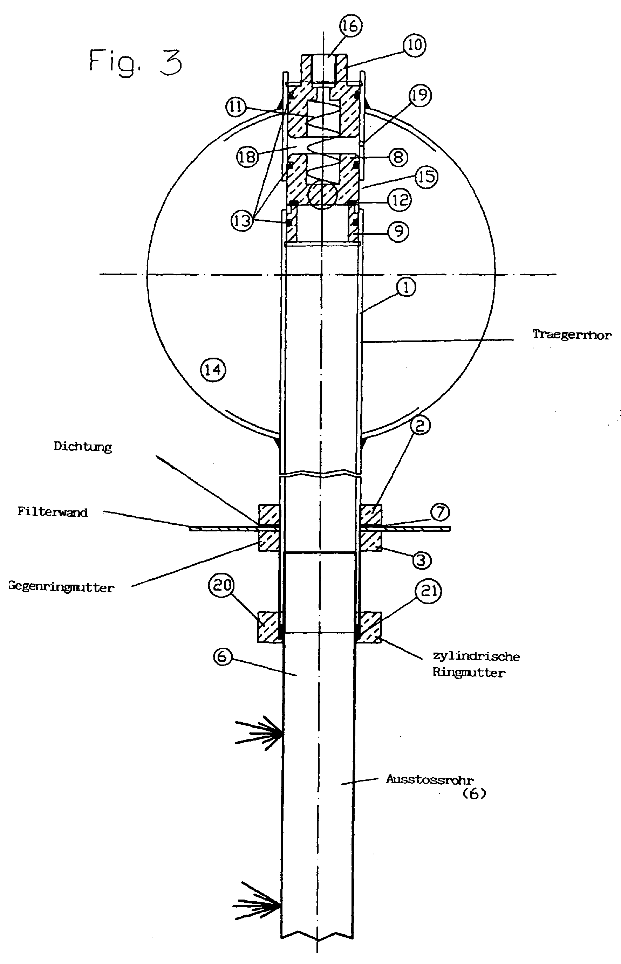

Die Fig. 3 zeigt eine zweite Ausführungsform des erfindungsgemäßen Reinigungssystems für Entstaubungsfilter. Auch das Reinigungssystem für Entstaubungsfilter gemäß Fig. 3 besteht aus einem Kolbenausstoßventil, das seinerseits einen Kolben 8 umfasst, der sich zwischen einem Dichtungsring 9 und einem Schussstück 10 durch die Einwirkung einer Rückzugfeder 11 hin- und her bewegen kann. Auch in diesem Fall ist im Anschlusspunkt der Elemente 8, 9 und 10 mit dem Trägerrohr 1 jeweils eine Ringdichtung 13 vorgesehen.

Auch im Kolbenausstoßventil der zweiten Ausführungsform des Reinigungssystems für Entstaubungsfilter ist eine Bohrung 19 vorgesehen, die den Behälter 14 mit der Kammer 18 verbindet. Im Gegensatz zum Kolbenausstoßventil der ersten Ausführungsform, ist diese Bohrung nicht im Kolben 8 selbst vorhanden, sondern im Trägerrohr 1.

Wenn das System nicht aktiviert ist, d.h. wenn der Durchlass 16 im Schlussstück 10 geschlossen ist, wird der Kolben 8 durch die Druckluft der Kammer 18 in seiner Absperrstellung des Durchlasses 15, der den Behälter 14 mit dem Ausstoßrohr 6 verbindet, gehalten.

Auch in diesem Fall wird bei Aktivieren des Systems durch Öffnen des Durchlasses 16 der Druck aus der Kammer 18 abgelassen. Nun überwiegt der Druck des Behälters 14, der auf den unteren Teil des Kolbens 8 einwirkt, welcher rasch angehoben wird. Auf diese Weise öffnet sich der Durchlass 15 und die Druckluft des Behälters 14 strömt in das Ausstoßrohr 6.

Bei Wiederschließen des Durchlasses 16 schließt die Öffnung 19, so dass die Druckluft des Behälters 14 wieder die Kammer 18 unter Druck setzt und so den Kolben 8 gegen den Dichtungsring 9 drückt und den Druckluftdurchlass 15 zum Ausstoßrohr 6 absperrt.

Im erfindungsgemäßen, in der Fig. 3 dargestellten Reinigungssystem, erfolgt das Blockieren des Ausstoßrohres mittels einer zylindrischen Ringmutter 20 und einem Segment aus einem elastischen Werkstoff, z.B. Kunststoff oder Gummi, 21.

Die zylindrische Ringmutter 20 übt einen Druck auf das Segment 21 aus, das leicht deformiert, das Ausstoßrohr 6 blockiert.

Diese Lösung ist gegenüber der in Fig. 1 dargestellten Ausführungsform vorteilhafter, da das Gewindebohren 4 des rückseitigen Endes des Trägerrohr entfällt, was das Herstellen des Systems weiter vereinfacht.

Weiterhin schafft das Kunststoff- oder Gummielement 21 eine pneumatische Abdichtung zwischen dem Trägerrohr 1 und dem Ausstoßrohr und gewährleistet einen hohen Druck des Luftstrahls zur Reinigung der Filter.

In der Praxis wurde festgestellt, dass das beschriebene erfindungsgemäße Reinigungssystem für Entstaubungsfilter eine entschieden einfachere und schnellere Bearbeitung und somit eine Kostenreduktion des Systems möglich macht.

Das im erfindungsgemäßen Reinigungssystem für Entstaubungsfilter verwendete Ausstoßventil weist außerdem keine Verschleißstellen auf, die eine planmäßige Wartung erforderlich machen. Nicht zuletzt weisen diese Kolbenausstoßventile bei gleich bleibender Luftdurchflussmenge im Verhältnis zu den Membranventilen einen um 50% reduzierten Platzbedarf auf.

Weiterhin können diese Kolbenausstoßventile am Behälter in kurzen Abständen montiert werden.

Die so dargelegte vorliegende Erfindung macht eine Vielfalt von Versionen möglich, die alle unter den erfinderischen Gedanken fallen. So können z.B. die verwendeten Werkstoffe und Abmessungen je nach Bedarf beliebig gewählt werden.

## Patentansprüche

1. Reinigungssystem für Entstaubungsfilter, das einen mit einem Trägerrohr (1) verbundenen Druckluftbehälter (14) aufweist, wobei das Trägerrohr (1) seinerseits mit einem Ausstossrohr (6) verbunden ist, **dadurch gekennzeichnet, dass** ein Kolbenausstossventil am Trägerrohr (1) montiert ist, das an einem seiner Enden ein Schlussstück (10) aufweist, mit einem Durchlass (16) der vom Behälter (14) nach aussen läuft, wobei der Schlussstück (10) mit einem Kolben (8) über eine Rückzugfeder (11) verbunden ist, wobei das Ausstossventil ausserdem an seinen anderen Ende einen Dichtungsring (9) aufweist, wobei der Kolben (8) im Ausstossventil läuft, zwischen einer Schliessposition des Ausstossventils wobei der Kolben (8) gegen den Dichtungsring (9) trifft, und einer geöffneten Position des Ausstossventils, wobei der Kolben (8) durch den Dichtungsring (9) angehoben ist, und **dadurch gekennzeichnet, dass** zwischen dem Kolben (8) und dem Schlussstück (10) eine Kammer (18) vorgesehen ist, die direkt mit dem Behälter (14) durch eine Bohrung (17, 19) verbunden ist.

2. Reinigungssystem für Entstaubungsfilter nach Anspruch 1, **dadurch gekennzeichnet, dass** der Kolben (8), der Dichtungsring (9) und das Schlussstück (10) an der Anschlussstelle mit dem Trägerrohr (1) jeweils mit einer Ringdichtung (13) versehen sind.

3. Reinigungssystem für Entstaubungsfilter nach einem der Ansprüche 1 oder 2, **dadurch gekennzeichnet, dass** das Trägerrohr (1) an seinem dem Behälter (14) abgewandten Ende mit einer Ringmutter (2), einer Gegenringmutter (3) und mit einer Flachdichtung (7) bestückt ist.

4. Reinigungssystem für Entstaubungsfilter nach einem beliebigen der vorangegangenen Ansprüche, **dadurch gekennzeichnet, dass** die Bohrung (17) im Kolben (8) verwirklicht ist.

5. Reinigungssystem für Entstaubungsfilter nach einem der Ansprüche 1 bis 3, **dadurch gekennzeichnet, dass** die Bohrung (19) im Trägerrohr (1) verwirklicht ist.

6. Reinigungssystem für Enstaubungsfilter nach einem beliebigen der vorangegangenen Ansprüche, **dadurch gekennzeichnet, dass** das Trägerrohr (1) an seinem dem Behälter (14) abgewandten Ende eine Gewindebohrung aufweist.

7. Reinigungssystem für Entstaubungsfilter nach einem beliebigen der vorangegangenen Ansprüche, **dadurch gekennzeichnet, dass** das Ausstossrohr (6) mit dem Trägerrohr (1) mittels einer konischen Ringmutter (5) verbunden ist.

8. Reinigungssystem für Entstaubungsfilter nach einem beliebigen Anspruch von 1 bis 5, **dadurch gekennzeichnet, dass** das Trägerrohr (1) mit dem Ausstossrohr (6) mittels einer zylinderförmigen Ringmutter (20) auf das dem Behälter (14) abgewandten Ende des Trägerrohrs aufgeschraubt ist und dass ein Element (21) aus einem elastischen Werkstoff zwischen der Ringmutter (20) und dem Trägerrohr (1) eingefügt ist.

9. Reinigungssystem für Entstaubungsfilter nach einem beliebigen der vorangegangenen Ansprüche, **dadurch gekennzeichnet, dass** der Kolben (8) mit einer Dichtung (12) versehen ist.

## Claims

1. Cleaning system for dust separation filters, which features a compressed air recipient (14) connected to a support pipe (1), in which the support pipe (1) is connected, in its turn to an expulsion pipe (6), **characterised by** the fact that, fitted in a position corresponding with the support pipe (1), is mounted an expulsion piston valve, which, in a position corresponding with an end thereof, features a closing part (10), with a passageway (16) which goes from the recipient (14) towards the exterior, in which the closing part (10) is connected to a piston (8) by means of a return spring (11), in which the expulsion valve features, in a position corresponding with the other end thereof, a sealing ring (9), inside which the piston (8) slides inside the expulsion valve, between an expulsion valve closed position in which the piston (8) touches the sealing ring (9), and an expulsion valve open position, in which the piston (8) is lifted through the sealing ring (9), and **characterised by** the fact that, between the piston (8) and the closing part (10), a chamber (18) is envisaged, which is directly linked to the recipient (14) through boring (17, 19).

2. Cleaning system for dust separation filters according to claim 1, **characterised by** the fact that the piston (8), the sealing ring (9) and the closing part (10), in a position corresponding with the point of contact with the support pipe (1), are respectively equipped with a circular gasket (13).

3. Cleaning system for dust separation filters according to claims 1 or 2, **characterised by** the fact that the support pipe (1) is equipped, in a position corresponding with an end thereof which is facing in the opposite direction to the recipient (14), with an eye nut (2), an eye lock nut (3) and a flat gasket (7).

4. Cleaning system for dust separation filters according to any one of the previous claims, **characterised by** the fact that the boring (17) is realized inside the piston (8).

5. Cleaning system for dust separation filters according to one the previous claims from 1 to 3, **characterised by** the fact that the boring (19) is realized inside the support pipe (1).

6. Cleaning system for dust separation filters according to any one of the previous claims, **characterised by** the fact that the support pipe (1) features threaded boring in a position corresponding with the end thereof which is facing in the opposite direction to the recipient (14).

7. Cleaning system for dust separation filters according to any one of the previous claims, **characterised by** the fact that the expulsion pipe (6) is connected to the support pipe (1) by an eye nut with a conical form (5).

8. Cleaning system for dust separation filters according to any one of the previous claims from 1 to 5, **characterised by** the fact that the support pipe (1) is screwed together with the expulsion pipe (6), by means of an eye nut with a cylindrical form (20), at the support pipe end facing in the opposite direction to the recipient (14) and that, inserted between the eye nut (20) and the support pipe (1), is an element (21) made of an elastic material.

9. Cleaning system for dust separation filters according to any one of the previous claims, **characterised by** the fact that the piston (8) is fitted with a gasket (12).

## Revendications

1. Système de nettoyage pour filtres de séparation des poussières, qui présente un récipient d'air comprimé (14) raccordé à un tuyau de support (1), sur lequel le tuyau de support (1) est raccordé à son tour à un tuyau d'éjection (6), **caractérisé par le fait qu'**au niveau du tuyau de support (1) est montée une valve à piston d'éjection, qui au niveau d'une de ses extrémités présente une pièce de fermeture (10), avec un passage (16) qui va du récipient (14) vers l'extérieur, sur lequel la pièce de fermeture (10) est raccordée à un piston (8) par l'intermédiaire d'un ressort de rappel (11), sur lequel la valve d'éjection présente, au niveau de l'autre extrémité, une bague d'étanchéité (9), sur laquelle le piston (8) coulisse à l'intérieur de la valve d'éjection entre une position de fermeture de la valve d'éjection sur laquelle le piston (8) touche la bague d'étanchéité (9), et une position d'ouverture de la valve d'éjection, sur laquelle le piston (8) est soulevé à travers la bague d'étanchéité (9), et **caractérisé par le fait qu'**entre le piston (8) et la pièce de fermeture (10) est prévue une chambre (18), qui est directement raccordée au récipient (14) par l'effet d'un alésage (17, 19).

2. Système de nettoyage pour filtres de séparation des poussières d'après la revendication 1, **caractérisé par le fait que** le piston (8), la bague d'étanchéité (9) et la pièce de fermeture (10) au niveau du point de contact avec le tuyau de support (1) sont respectivement munis d'un joint circulaire (13).

3. Système de nettoyage pour filtres de séparation des poussières d'après l'une des revendications 1 ou 2, **caractérisé par le fait que** le tuyau de support (1) est muni, au niveau de son extrémité tournée dans la direction opposée par rapport au récipient (14), d'un écrou à boucle (2), d'un contre-écrou à boucle (3) et d'un joint plat (7).

4. Système de nettoyage pour filtres de séparation des poussières d'après l'une des revendications précédentes au choix, **caractérisé par le fait que** l'alésage (17) est réalisé à l'intérieur du piston (8).

5. Système de nettoyage pour filtres de séparation des poussières d'après l'une des revendications de 1 à 3, **caractérisé par le fait que** l'alésage (19) est réalisé à l'intérieur du tuyau de support (1).

6. Système de nettoyage pour filtres de séparation des poussières d'après l'une des revendications précédentes au choix, **caractérisé par le fait que** le tuyau de support (1) présente un alésage fileté au niveau de son extrémité tournée dans la direction opposée par rapport au récipient (14).

7. Système de nettoyage pour filtres de séparation des poussières d'après l'une des revendications précédentes au choix, **caractérisé par le fait que** le tuyau d'éjection (6) est raccordé au tuyau de support (1) au moyen d'un écrou à boucle de forme conique (5).

8. Système de nettoyage pour filtres de séparation des poussières d'après l'une des revendications précédentes au choix de 1 à 5 , **caractérisé par le fait que** le tuyau de support (1) est vissé au tuyau d'éjection (6), au moyen d'un écrou à boucle de forme cylindrique (20), à l'extrémité du tuyau de support tournée dans la direction opposée par rapport au récipient (14) et qu'entre l'écrou à boucle (20) et le tuyau de support (1) est inséré un élément (21) composé d'un matériau élastique.

9. Système de nettoyage pour filtres de séparation des poussières d'après l'une des revendications précédentes au choix, **caractérisé par le fait que** le piston (8) est muni d'un joint (12).
